# EUROPÄISCHE PATENTANMELDUNG

(11) **EP 1 518 626 A2**
(43) Veröffentlichungstag der Anmeldung: **30.03.2005**
(21) Anmeldenummer: 04022849.6
(22) Anmeldetag: 24.09.2004
(51) Int. Cl.: B23B 51/02, B23B 51/06

(54) **Tieflochbohrer und Einspannvorrichtung**

(30) Priorität: 14.11.2003 DE 10353324; 25.09.2003 DE 10344620
(71) Anmelder: Manfred Schwegler Werkzeugfabrik, 89269 Vöhringen (DE)
(72) Erfinder: Schwegler, Bernd, 89269 Vöhringen (DE); Schwegler, Reiner, 89269 Vöhringen (DE)
(74) Vertreter: Körfer, Thomas

(57) **Zusammenfassung**

Ein einlippiger Tieflochbohrer (1) umfaßt einen eine Axialnut (5) enthaltenden Werkzeugschaft (3) und einen ersten Bohrkopf (2), der an einem ersten an den Werkzeugschaft (3) angrenzenden Ende (44) des einlippigen Tieflochbohrer (1) angebracht ist. Der Werkzeugschaft (3) erstreckt sich vom ersten Bohrerkopf (2) bis zu einem zweiten Bohrerkopf (4), der an einem zweiten Ende (45) des einlippigen Tieflochbohrers (1) angebracht ist.

## Beschreibung

Die Erfindung betrifft einen Tieflochbohrer mit dazugehöriger Einspannvorrichtung.

Tieflochbohrer werden bevorzugt zum Bohren von Bohrlöchern verwendet, deren Bohrlochdurchmesser zur Bohrlochtiefe in einem Verhältnis z. B. zwischen 1:10 und 1:100 liegt. Tieflochbohrer weisen neben einer entsprechenden geometrischen Auslegung des Werkzeugschafts sehr gute Schneideigenschaften des Bohrkopfes und sehr gute Gleiteigenschaften des Werkzeugschaftes an der Wand des Bohrlochs auf.

Hervorragende Schneideigenschaften des Tieflochbohrers werden durch die Verwendung von Hartmetallbohrköpfen erzielt. Eine Optimierung der Gleiteigenschaften des Tieflochbohrers im Bohrloch erfolgt durch Reduzierung der Reibungsfläche zwischen Werkzeugschaft und Bohrungswand. Die Reduzierung der Reibungsfläche wird auf bekannte Weise entweder durch Anbringung von axial verlaufenden schmal ausgeführten Führungsschienen am Außendurchmesser des Werkzeugschaftes als Abstandhalter zwischen Werkzeugschaft und Bohrungswand oder durch Reduzierung des Außendurchmesser des Werkzeugschaftes gegenüber dem Außendurchmesser des Bohrkopfes verwirklicht.

In der DE 297 16 377 U1 ist ein Tieflochbohrer dargestellt. Er weist einen Bohrkopf, einen Werkzeugschaft und eine Spannhülse auf. Bohrkopf und Werkzeugschaft wie auch Werkzeugschaft und Spannhülse sind jeweils über eine Lötverbindung miteinander verbunden. Zum definierten Abtransport des bei der Bohrung geschnittenen Spans ist im Bohrkopf und Werkzeugschaft eine asymmetrische V-förmige Axialnut vorgesehen. Die Führung des Kühlmittels erfolgt im Bohrkopf und Werkzeugschaft durch einen axial verlaufenden Kühlkanal. Gute Schneideigenschaften werden durch die Verwendung eines Hartmetallbohrkopfes erzielt. Geringe Reibung und damit gute Gleiteigenschaften zwischen Werkzeugschaft und Bohrungswand werden durch einen Werkzeugschaft verwirklicht, dessen Aussendurchmesser kleiner als der Außendurchmesser des Bohrkopfes ausgeführt ist.

Nachteilig an einer derartigen Ausführung eines Tieflochbohrers ist die in Relation zur durchzuführenden Aufgabe - Bohrung eines tiefen Bohrlochs - vergleichsweise hohe Komplexität des Werkzeugaufbaus, welche aus drei vollkommen verschiedenen Bauteilen - Bohrkopf, Werkzeugschaft und Spannhülse - besteht. Neben erhöhten Fertigungs- und Logistikkosten durch die Herstellung mehrerer Bauteile werden die Fertigungskosten des Tieflochbohrers insbesondere durch die Notwendigkeit einer geeigneten Verbindungstechnik für die Verbindung der verschiedenen Bauteilen zusätzlich erhöht. Eine zusätzliche konstruktive Auslegung der einzelnen Bauteile im Hinblick auf die zu realisierende Verbindung und ein zusätzlicher Fertigungsschritt - Lötung - erhöhen die Produkt- und Produktionskomplexität des Tieflochbohrers unnötig.

Als weiterer Nachteil des Tieflochbohrers der DE 297 16 377 U1 ist die begrenzte Einstellung der Auskraglänge des Tieflochbohrers zu nennen. Da die Auskraglänge des Tieflochbohrers einzig durch axiale Verschiebung der Spannhülse in der Spannvorrichtung der Werkzeugmaschinen realisiert werden kann, stellt die begrenzte Länge der Spannhülse eine Beschränkung für eine hoch variable Einstellung der Auskraglänge des Tieflochbohrers dar.

Der Erfindung liegt daher die Aufgabe zugrunde, einen Tieflochbohrer gemäß dem Oberbegriff von Anspruch 1 und eine Einspannvorrichtung derart weiterzubilden, daß der Tieflochbohrer eine möglichst einfache Aufbaustruktur im Hinblick auf eine kostengünstige Fertigung aufweist und in seiner Auskraglänge weitest möglich einstellbar ist.

Die Aufgabe der Erfindung wird durch einen Tieflochbohrer mit den Merkmalen des Anspruchs 1 und eine Einspannvorrichtung mit den Merkmalen des Anspruchs 6 gelöst.

Der erfindungsgemäße, vorzugsweise einlippige Tieflochbohrer wird durch Integration des Bohrkopfes, des Werkzeugschaftes und der Spannhülse in einem Bauteil realisiert. Der erfindungsgemäße Tieflochbohrer besteht aus einem zylindrischen Werkzeugschaft, in dem eine asymmetrische V-förmige Axialnut in voller Länge ausgeführt ist. Der Werkzeugschaft geht an seinen beiden Enden jeweils im stetigen Übergang in einen Bohrkopf über.

Aufgrund dieser vergleichsweise einfachen Geometrie läßt sich der erfindungsgemäße einlippige Tieflochbohrer beispielsweise durch Stranggießen als Stahl- oder Hartmetallprofil kostengünstig herstellen. Einzusätzlicher Verbindungsprozeß, der die Fertigungskosten unnötig erhöhen würde, entfällt somit.

Die Ausprägung von zwei Bohrköpfen jeweils an den beiden Enden des erfindungsgemäßen einlippigen Tieflochbohrers verdoppelt die Standzeit des Werkzeugs im Durchschnitt. Die einfache Geometrie des erfindungsgemäßen einlippigen Tieflochbohrers vereinfacht auch den Instandsetzungsaufwand des Werkzeugs, da ein Nachschleifen eines derartigen Tieflochbohrers in Abnutzungsfall einfacher - einfachere Vorrichtungen und Werkzeuge sowie höhere Automatisierung für Nachschleifen möglich - verwirklicht werden kann.

Eine Einstellung der Auskraglänge des erfindungsgemäßen einlippigen Tieflochbohrers über einen möglichst weiten Bereich wird durch eine erfindungsgemäße Einspannvorrichtung realisiert, bei der der Tieflochbohrer an einer beliebigen Stelle seines Werkzeugschaftes in einer Durchgangsbohrung einer Spannzange der Einspannvorrichtung gehalten wird. Auf diese Weise ist eine axiale Verschiebung des Tieflochbohrers in der erfindungsgemäßen Einspannvorrichtung möglich. Diese axiale Bewegungsfreiheit des Tieflochbohrers in der Einspannvorrichtung wird durch entsprechende geometrischen Ausgestaltung der übrigen Bauteile der Einsparungsvorrichtung unterstützt.

Vorteilhafte Ausgestaltungen der Erfindung sind in den jeweils abhängigen Ansprüchen angegeben.

Der erfindungsgemäße einlippige Tieflochbohrer weist im Bereich seiner beiden Bohrköpfe einen größeren Außendurchmesser als im Bereich des Werkzeugschaftes auf. Auf diese Weise wird die Reibungsfläche zwischen Tieflochbohrer und Bohrungswand reduziert und damit die Gleiteigenschaft des erfindungsgemäßen einlippigen Tieflochbohrers erhöht.

Zur Erhöhung der Schneideigenschaften des erfindungsgemäßen einlippigen Tieflochbohrers wird insbesondere für die beiden Bohrköpfe ein Hartmetallwerkstoff verwendet. Aus Kostengründen kann der Bereich des Werkzeugschaftes anstelle von Hartmetall aus Stahl hergestellt sein.

Zur Kühlung des erfindungsgemäßen einlippigen Tieflochbohrers ist ein in axialer Richtung verlaufender Kühlkanal vorgesehen.

Ein wesentliches Problem bei Spannvorrichtungen insbesondere von Tieflochbohrern ist die gezielte Führung des Kühlmittels über die Spannvorrichtung in die Kühlkanäle des Tieflochbohrers und damit einhergehend eine zuverlässige Abdichtung der Spannvorrichtung gegen Austreten von Kühlmittel an unerwünschten Stellen - beispielsweise an der Spannzange - der Spannvorrichtung.

Um den unnötigen Verlust von Kühlmittel für den Tieflochbohrer zu vermeiden, wird in einer ersten Ausführungsform der erfindungsgemäßen Einspannvorrichtung in der Durchgangsbohrung einer Überwurfmutter, durch die der erfindungsgemäße einlippige Tieflochbohrer aus der ersten Ausführungsform der erfindungsgemäßen Einspannvorrichtung herausgeführt wird, ein Absperrorgan eingebaut, das die gesamte erfindungsgemäße Einspannvorrichtung vor ausströmenden Kühlmittel dichtend verschließt. In einer zweiten Ausführungsform der erfindungsgemäßen Einspannvorrichtung wird das Absperrorgan in der ersten. bzw. zweiten Innenbohrung eines Schaftes, in der der erfindungsgemäße einlippige Tieflochbohrer innerhalb der erfindungsgemäßen Einspannvorrichtung geführt ist, eingebaut, um ein Austreten von Kühlmittel aus der erfindungsgemäßen Einspannvorrichtung zu vermeiden. Da das Absperrorgan in seinem Zentrum eine Ausnehmung aufweist, deren Querschnittsprofil dem Profil des erfindungsgemäßen einlippigen Tieflochbohrers entspricht, übernimmt das Absperrorgan die zusätzliche Aufgabe der zentrierten Führung und radialen Befestigung des erfindungsgemäßen einlippigen Tieflochbohrers.

Die Einspannvorrichtung ist über den Schaft in der Spannvorrichtung einer Werkzeugmaschine eingespannt und weist deshalb ein an die Spannvorrichtung der Werkzeugmaschine angepaßtes Außenprofil auf.

Die beiden Ausführungsforrmen der Erfindung sind in der Zeichnung dargestellt und werden nachfolgend näher beschrieben. Es zeigen:
- Fig. 1A, 1B: eine Seitenansicht und eine Draufsicht eines erfindungsgemäßen einlippigen Tieflochbohrers;
- Fig. 2: eine Seitenansicht einer ersten Ausführungsform der erfindungsgemäßen Einspannvorrichtung mit einem eingespannten erfindungsgemäßen einlippigen Tieflochbohrers im Halbschnitt;
- Fig. 3: eine Längsschnittdarstellung einer ersten Ausführungsform der erfindungsgemäßen Einspannvorrichtung mit einem eingespannten erfindungsgemäßen einlippigen Tieflochbohrer ;
- Fig. 4A, 4B: eine Längsschnittdarstellung und eine Draufsicht einer Spannzange;
- Fig. 5A, 5B: eine Seitenansicht und eine Draufsicht einer Überwurfmutter;
- Fig. 6A,: eine Seitenansicht einer zweiten Ausführungsform der erfindungsgemäßen Einspannvorrichtung mit einem eingespannten erfindungsgemäßen einlippigen Tieflochbohrers im Halbschnitt;
- Fig. 6B: eine Längsschnittdarstellung eines Ausschnitts der zweiten Ausführungsform der erfindungsgemäßen Einspannvorrichtung mit einem eingespannten erfindungsgemäßen einlippigen Tieflochbohrer und
- Fig. 6C: eine Draufsicht eines Absperrorgans der zweiten Ausführungsform der erfindungsgemäßen Einspannvorrichtung.

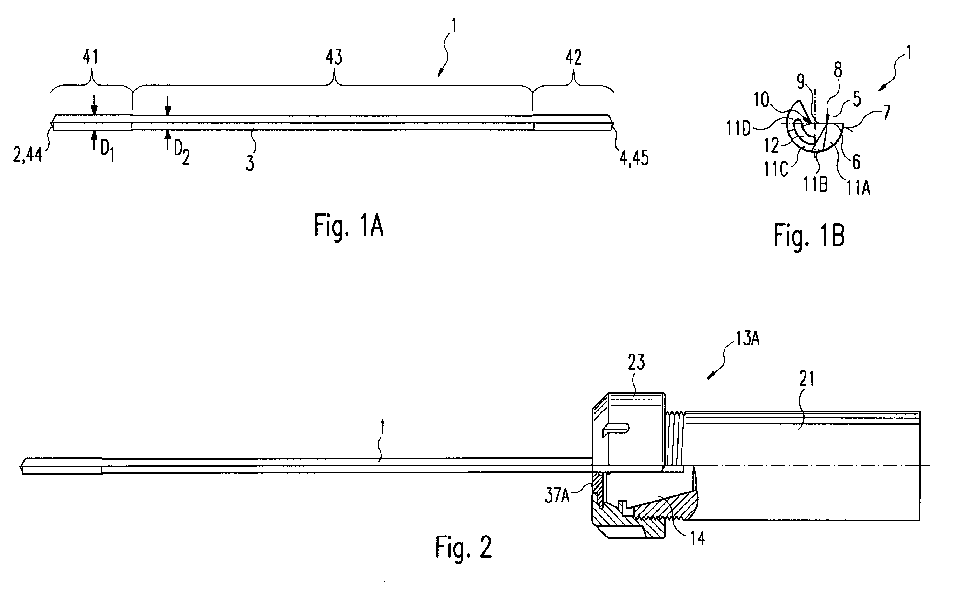

Der erfindungsgemäße einlippige Tieflochbohrer 1 ist in der Seitenansicht in Fig. 1A und in der Draufsicht in Fig. 1B dargestellt.

Der Tieflochbohrer 1 besteht aus einem ersten Bohrkopf 2, an dem sich ein Werkzeugschaft 3 anschließt, der wiederum in einen zweiten Bohrkopf 4 übergeht. Der Tieflochbohrer 1 besteht aus einem zylindrischen Grundprofil, in das eine V-förmige axial gerichtete Axialnut 5 zum gezielten Abtransport des bei der Bohrung geschnittenen Spans eingearbeitet ist.

Der Werkzeugschaft 3 weist in einem den ersten Bohrkopf 2 beinhaltenden ersten Bereich 41 und in einem den zweiten Bohrkopf 4 beinhaltenden zweiten Bereich 42 einen Durchmesser D₁ auf, der geringfügig größer als der Durchmesser D₂ im zwischen dem ersten und dritten Bereich 41 und 42 befindlichen dritten Bereich 43 ist. Aufgrund des geringfügigen Unterschiedes zwischen den beiden Durchmessern D₁ und D₂ ist ein weitestgehend stetiger Übergang zwischen ersten und dritten Bereich 41 und 43 bzw. zwischen zweiten und dritten Bereich 42 und 43 möglich. Aufgrund des geringfügig kleineren Durchmessers D₂ des dritten Bereiches 43 steht der Tieflochbohrer 1 nur über die vergleichsweise kleinen Mantelflächen des ersten und zweiten Bereiches 41 und 42 mit der Bohrungswand in Berührung. Die Reibflächen zwischen dem Tieflochbohrer 1 und der Bohrungswand sind somit reduziert, was zu einer Verbesserung der Gleiteigenschaften führt.

An der Stirnseite weist der erste und zweite Bohrkopf 2 und 4 mehrere durch radial gerichtete Kanten getrennte Freiflächen 11A, 11B, 11C und 11D auf. Der erste und zweite Bohrkopf 2 und 4 besteht jeweils aus einer Hauptschneide 6, die am Übergang zwischen der V-förmigen Axialnut 5 und der Freifläche 11A im Bereich zwischen der Außenmantelfläche 7 und der exzentrisch angeordneten Spitze 8 verläuft. Die Nebenschneide 9 verläuft ebenfalls am Übergang zwischen der V-förmigen Axialnut 5 und der Freifläche 11A im Bereich zwischen der Spitze 8 und dem Zentrum 10 des Tieflochbohrers 1. Geometriebedingt erfolgt mit der Hauptschneide 6 ein wesentlich umfangreicherer Spanschnitt als mit der Nebenschneide 9.

Zur Kühlung des Tieflochbohrers 1 ist in axialer Richtung ein Kühlkanal 12, der beispielsweise ein nierenförmiges Profil aufweist, vom ersten zum zweiten Bohrkopf 2 und 4 geführt.

Aufgrund der spiegelsymmetrischen Ausführung können der erste und zweite Bohrkopf 2 und 4 alternativ für die Bohrung eines Bohrlochs verwendet werden, was die Standzeit des Tieflochbohrers 1 durchschnittlich verdoppelt.

Der Tieflochbohrer 1 kann vollständig aus einem Hartmetallwerkstoff hergestellt sein. Aus Kostengründen kann alternativ nur im ersten und zweiten Bereich 41 und 42, die jeweils den ersten und zweiten Bohrkopf 2 und 4 enthalten, ein Hartmetallwerkstoff verwendet werden, während im dritten Bereich, der keine Relevanz für den Schneidvorgang besitzt, ein gewöhnlicher Stahl zum Einsatz kommen.

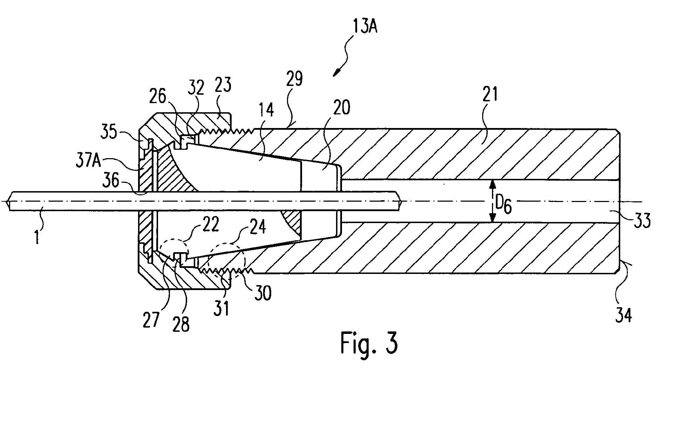

In den Fig. 2 und 3 ist eine erste Ausführungsform einer erfindungsgemäße Einspannvorrichtung 13A mit einem eingespannten erfindungsgemäßen einlippigen Tieflochbohrer 1 dargestellt.

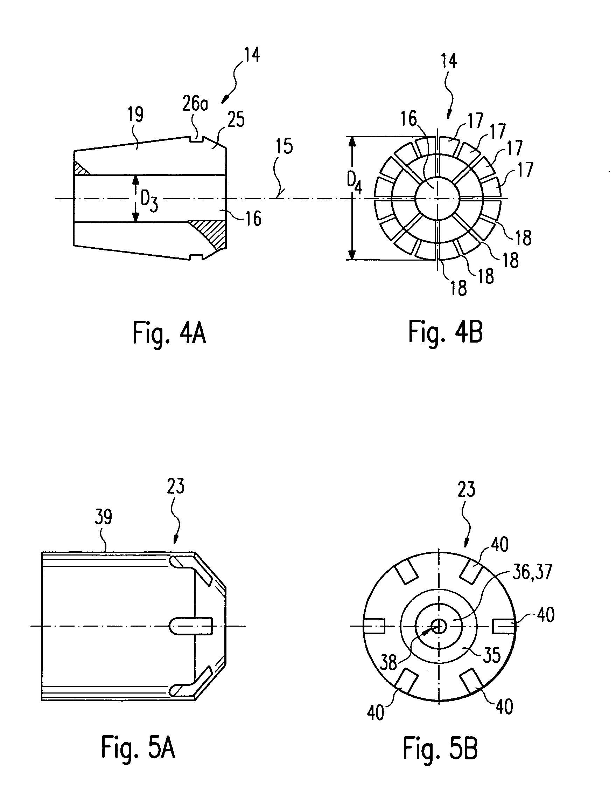

Der Tieflochbohrer 1 ist in einer rotationssymmetrischen Spannzange 14 zentriert geführt und axial und radial befestigt. Die rotationssymmetrische Spannzange 14 weist gemäß Fig. 4A hierzu eine zentrisch angeordnete Durchgangsbohrung 16 auf, in der der Tieflochbohrer 1 gespannt gehalten ist. Die Auskraglänge des Tieflochbohrers 1 aus der Einspannvorrichtung 13A wird durch die axiale Positionierung des Tieflochbohrers in der Spannzange 14 festgelegt. Da der Durchmesser D₃ der Durchgangsbohrung 16 dem Durchmesser D₂ des ersten und zweiten Bohrkopfes 2 und 4 des Tieflochbohrers 1 entspricht, kann der Tieflochbohrer 1 ohne Probleme in erste Durchgangsbohrung 16 der Spannzange 14 hinein und herausgeführt werden. Zur Ausführung der Spannfunktion umfaßt die Spannzange gemäß Fig. 4B mehrere in Achsrichtung verlaufende Segmente 17, welche durch ebenfalls in Achsichtung verlaufende Schlitze 18 voneinander getrennt sind.

Greift an der Spannzange 14 eine zur Rotationsachse 15 gerichtete Spannkraft an, so werden die einzelnen rotationssymmetrisch und in Achsrichtung ausgerichteten Segmente 17 unter Minimierung der Schlitze 18 aneinander gedrückt, so daß der in Achsrichtung sich ändernde Außendurchmesser D₄ und der in Achsrichtung konstante Innendurchmesser D₃ der Durchgangsbohrung 16 der Spannzange 14 sich verkleinert. Der verkleinerte Durchmesser D₃ der Durchgangsbohrung 16 bewirkt eine Zentrierung wie auch eine axiale und radiale Befestigung des Tieflochbohrers 1 in der Spannzange 14.

Die zur Rotationsachse 15 gerichtete Spannkraft, welche auf die Spannzange 14 wirkt, wird erzeugt, indem die Spannzange 14 mit ihrem ersten konisch geformten Teilkörper 19 in eine ebenfalls komisch geformte und in der ersten Stirnfläche 32 zentrisch angeordnete erste Innenbohrung 20 eines rotationssymmetrischen Schaftes 21 gefügt wird. Da der Innendurchmesser der konisch geformten ersten Innenbohrung 20 der Schaftes 21 geringfügig kleiner als der Außendurchmesser des konisch geformten ersten Teilkörpers 19 der Spannzange 14 ausgelegt ist, wirkt beim Einfügen der Spannzange 14 in den Schaft 21 vom Schaft 21 auf die Spannzange 14 eine Spannkraft, die zu einer radial gerichteten Kompression der Spannzange 14 führt.

Zur axialen Fixierung der Spannzange 14 in der ersten Innenbohrung 20 der Schaftes 21 wird die Spannzange 14 über eine Schnappverbindung 22 kraftschlüssig mit einer ebenfalls rotationssymmetrischen Überwurfmutter 23 verbunden und über eine Schraubverbindungen 24 zwischen Überwurfmutter 23 und Schaft 21 in die Innenbohrung 20 des Schaftes 21 in axialer Richtung gedrückt.

Die Schnappverbindungen 22 zwischen Spannzange 14 und Überwurfmutter 23 erfolgt zwischen dem konisch geformten zweiten Teilkörper 25 der Spannzange 14 und einer zwischen ersten und zweiten Teilkörper 19 und 25 befindlichen ringförmigen Nut 26 und einem ebenfalls konisch geformten Innenbohrungsbereich 27 in einer Innenbohrung 26 der Überwurfmutter 23 sowie einem an den konisch geformten Innenbohrungsbereich 27 anschließenden Steg 28 in der Innenbohrung 26 der Überwurfmutter 23. Der konisch geformte zweite Teilkörper 25 der Spannzange 14 weist dabei den gleichen Durchmesser und die gleiche Profilhöhe wie der konisch geformte Innenbohrungsbereich 27 in der Innenbohrung 26 der Überwurfmutter 23 auf. Analog entspricht der Durchmesser der ringförmigen Nut 26 der Spannzange 14 dem Innendurchmesser des Steges 28 in der Innenbohrung 26 der Überwurfmutter 23. Auf diese Weise entsteht bei Einrasten des Steges 28 der Überwurfmutter 23 in der ringförmige Nut 26 der Spannzange 14 eine formschlüssige Schnappverbindung zwischen der Spannzange 14 und der Überwurfmutter 23.

Der Bauteileverbund aus Spannzange 14 und Überwurfmutter 23 wird über eine Schraubverbindung 24 zwischen Überwurfmutter 22 und Schaft 21 zur axialen Fixierung der Spannzange 14 in der ersten Innenbohrung 20 der Schaftes 21 befestigt. Hierzu wird ein an der Außenmantelfläche 29 der Schaftes 21 in der Nähe der die Innenbohrung 20 enthaltenden ersten Stirnfläche 32 angebrachtes Außengewinde 30 in ein dazu komplementäres Innengewinde 31, das im Anschluß an den Steg 28 in der Innenbohrung 26 der Überwurfmutter 22 geschnitten ist, geschraubt.

Der Schaft 21 der Einspannvorrichtung 13A weist in Fortsetzung der konisch geformten und zentrisch angeordneten ersten Innenbohrung 20 eine ebenfalls zentrisch angeordnete zweite Innenbohrung 33 auf, die bis zur zweiten Stirnfläche 34 des Schaftes 21 verläuft. Diese dient einerseits als Zuführkanal für Kühlmittel von der Spannvorrichtung der Werkzeugmaschine zum Kühlkanal 12 des Tieflochbohrers 1 und andererseits als notwendiger Stauraum für den Tieflochbohrer 1, falls bei klein eingestellter Auskraglänge der Tieflochbohrer 1 mit einem größeren Teil seiner Bohrerlänge aus der ersten Durchgangsbohrung 16 im ersten konisch geformten Teilkörper 19 der Spannzange 14 herausragt.

Die Überwurfmutter 32 weist im Zentrum ihrer Stirnwand 35 eine Durchgangsbohrung 36 auf, durch die der Tieflochbohrer 1 aus der Einspannvorrichtung 13A herausgeführt wird. Als Abdichtung gegen unerwünschtes Austreten von Kühlmittel aus der Einspannvorrichtung 13A ist in einer ersten Ausführungsform der erfindungsgemäßen Einspannvorrichtung 13A in der Durchgangsbohrung 36 ein Absperrorgan 37A eingelassen.

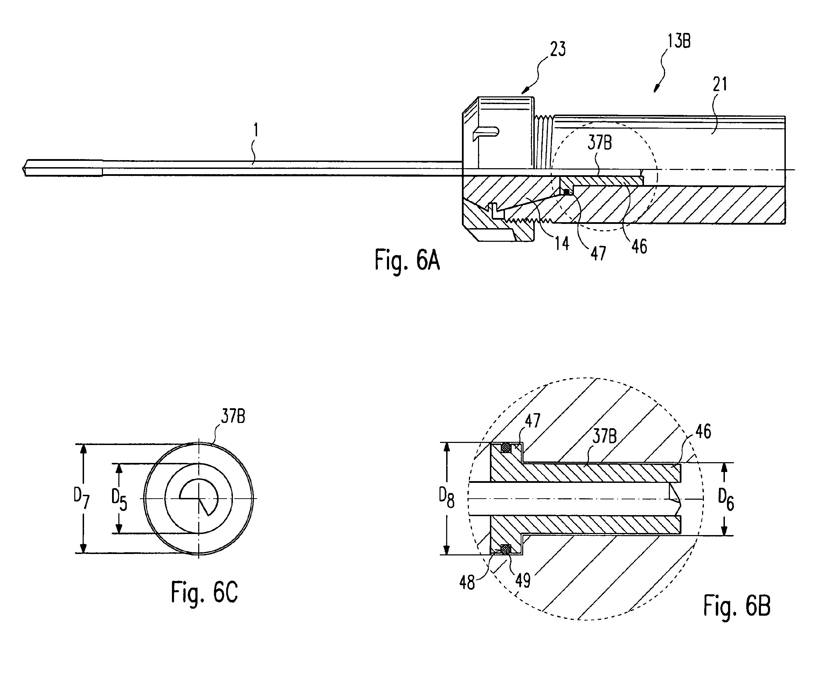

In einer zweiten Ausführungsform der erfindungsgemäßen Einspannvorrichtung 13B, die in den Fig. 6A-6C dargestellt ist, ist ein Absperrorgan 37B mit einem zylindrischen Teilkörper 46, dessen Außendurchmesser D₅ geringfügig größer als der Durchmesser D₆ der zweiten Innenbohrung 33 des Schafts 21 ausgelegt ist, und einem an den zylindrischen Teilkörper 46 anschließenden flanschförmigen Teilkörper 47, dessen Außendurchmesser D₇ geringfügig größer als der kleinste Durchmesser D₈ der konisch verlaufenden ersten Innenbohrung 20 des Schaftes 21 ausgelegt ist, in die erste und zweite Innenbohrung 20 und 33 des Schaftes 21 mittels Preßpassung dichtend eingefügt. Zusätzlich ist in einer ringförmigen Nut 48 im flanschförmigen Teilkörper 47 des Absperrorgan 37B ein Dichtring 49 eingefügt. Die Preßpassung des Absperrorgans 37B in der ersten und zweiten Innenbohrung 20 und 33 des Schaftes 21 sowie der Dichtring 49 sorgen für eine Abdichtung der zweiten Ausführungsform der erfindungsgemäßen Einspannvorrichtung 13B gegen ausströmemdes Kühlmittel.

Die beiden Absperrorgane 37A und 37B der ersten und zweiten Ausführungsform der erfindungsgemäßen Einspannvorrichtung 13A und 13B weisen zur Herausführung des Tieflochbohrers 1 aus der Einspannvorrichtung 13A und 13B in ihrem Zentrum eine Ausnehmung 38 auf, deren Querschnittsprofil dem Profil des Tieflochbohrers 1 entspricht. Auf diese Weise wird eine zusätzliche Zentrierung und radiale Befestigung des Tieflochbohrers 1 in der Einspannvorrichtung 13A oder 13B durch das Absperrorgan 37A oder 37B vollzogen.

Bei der zweiten Ausführungsform der erfindungsgemäßen Einspannvorrichtung 13B ist jeweils ein Absperrorgan 37B bündig mit den beiden Enden 44 und 45 des einlippigen Tieflochbohrers 1 auf den Tieflochbohrer 1 gefügt, um den ersten und zweiten Bohrkopf 2 und 4 beim Transport zu schützen. Beim Einspannen des einlippigen Tieflochbohrers 1 in die zweite Ausführungsform der Einspannvorrichtung 13B wird das Absperrorgan 37B des im folgenden Bohrvorgang zu nutzenden ersten oder zweiten Bohrkopfes 2 oder 4 entfernt.

Im Hinblick auf eine kraft- beziehungsweise momentenintensive Verschraubung der Überwurfmutter 32 mit den Schaft 21 mittels Spezialwerkzeug weist die Überwurfmutter 32 am Übergang zwischen Stirnwand 35 und Außenmantel 39 mehrere in äquidistanten Winkelabschnitten verteilte Kerben 40 auf.

## Patentansprüche

1. Tieflochbohrer (1) mit einem eine Axialnut (5) enthaltenden Werkzeugschaft (3) und einem ersten Bohrkopf (2), der an einem ersten an den Werkzeugschaft (3) angrenzenden Ende (44) des Tieflochbohrers (1) angebracht ist,
**dadurch gekennzeichnet,**
**daß** der Werkzeugschaft (3) sich vom ersten Bohrerkopf (2) bis zu einem zweiten Bohrerkopf (4) erstreckt, der an einem zweiten Ende (45) des Tieflochbohrers (1) angebracht ist.

2. Tieflochbohrer nach Anspruch 1,
**dadurch gekennzeichnet,**
**daß** im Innern des Werkzeugschafts (3) und im ersten und zweiten Bohrkopf (2, 4) zumindest ein in achsparalleler Richtung vom ersten bis zum zweiten Bohrerkopf (2, 4) verlaufender Kühlkanal (12) vorgesehen ist.

3. Tieflochbohrer nach Anspruch 1 oder 2,
**dadurch gekennzeichnet,**
**daß** der Werkzeugschaft (3) in einem an den ersten und zweiten Bohrerkopf (2, 4) jeweils angrenzender ersten und zweiten Bereich (41, 42) jeweils einen geringfügig größeren Durchmesser D₁ aufweist als der Durchmesser D₂ in einem zwischen dem ersten und zweiten Bereich (41, 42) befindlichen dritten Bereich (43).

4. Tieflochbohrer nach einem der Ansprüche 1 bis 3,
**dadurch gekennzeichnet,**
**daß** der einlippige Tieflochbohrer (1) aus Hartmetall besteht.

5. Tieflochbohrer nach Anspruch 3,
**dadurch gekennzeichnet,**
**daß** der erste und zweite Bohrerkopf (2, 4) und der jeweils angrenzende erste und zweite Bereich (41, 42) des Werkzeugschaftes (3) aus Hartmetall und der dritte Bereich (43) des Werkzeugschafts (3) einem anderen Metall, insbesondere aus Stahl, besteht.

6. Einspannvorrichtung (13A; 13B) zur zentrischen Führung und axialen und radialen Befestigung eines Tieflochbohrers (1) nach einem der Ansprüche 1 bis 5 mit einer den Tieflochbohrer (1) aufnehmenden Spannzange (14), einem die Spannzange (14) in seiner ersten Innenbohrung (20) gespannt haltenden Schaft (21), einer die Spannzange (14) in der ersten Innenbohrung (20) des Schaftes (21) in axialer Richtung fixierenden Überwurfmutter (23) und einem Absperrorgan (37A; 37B),
wobei der Tieflochbohrer (1) zur Einstellung seiner Auskraglänge an einer beliebigen Stelle des Werkzeugschaftes (3) in der Einspannvorrichtung (13A; 13B) einspannbar ist.

7. Einspannvorrichtung nach Anspruch 6,
**dadurch gekennzeichnet,**
**daß** die Spannzange (14) zur Aufnahme des Tieflochbohrers (1) eine Durchgangsbohrung (16) aufweist, deren Durchmesser D₃ geringfügig größer als der Durchmesser des lippenförmigen Tieflochbohrers (1) ist.

8. Einspannvorrichtung nach Anspruch 6 oder 7,
**dadurch gekennzeichnet,**
**daß** die Überwurfmutter (23) eine axial verlaufende Innenbohrung (26) mit einem Innengewinde (31) und an ihrer Stirnwand (35) eine sich zentral an die Innenbohrung (26) anschließende Durchgangsbohrung (36) zur zentrischen Führung des einlippigen Tieflochbohrers (1) ausweist.

9. Einspannvorrichtung nach einem der Ansprüche 6 bis 8,
**dadurch gekennzeichnet,**
**daß** die Spannzange (14) ein rotationssyymmetrisches Profil aufweist, dessen Außendurchmesser in einem ersten und zweiten Teilkörper (19, 25), die durch eine ringförmige Nut (26) voneinander getrennt sind, in Richtung des jeweiligen Endes der Spannzange (14) konisch verläuft.

10. Einspannvorrichtung nach Anspruch 9,
**dadurch gekennzeichnet,**
**daß** die Spannzange (14) mehrere durch axial verlaufende Schlitze (18) getrennte Segmente (17) umfaßt.

11. Einspannvorrichtung nach Anspruch 9 oder 10,
**dadurch gekennzeichnet,**
**daß** die Spannzange (14) bei Einwirkung einer äußeren, zur Rotationsachse (15) der Spannzange (14) gerichteten Spannkraft hinsichtlich ihres Außendurchmessers D₄ und des Durchmessers D₃ ihrer Durchgangsbohrung (16) federnd zusammengespannt ist.

12. Einspannvorrichtung nach einem der Ansprüche 9 bis 11,
**dadurch gekennzeichnet,**
**daß** zwischen Spannzange (14) und Überwurfmutter (23) eine Schnappverbindung (22) besteht, indem ein Formschuß zwischen dem konisch verlaufenden zweiten Teilkörper (25) und der ringförmigen Nut (26) der Spannzange (14) und einem zwischen Innengewinde (31) und Stirnwand (35) der Überwurfmutter (23) angebrachten Steg (28) sowie einem konisch verlaufenden Innenbohrungsbereich (27), dessen Innendurchmesser dem Außendurchmesser des konisch verlaufenden ersten Teilkörper (19) der Spannzange (14) entspricht, gebildet ist.

13. Einspannvorrichtung nach einem der Ansprüche 9 bis 12,
**dadurch gekennzeichnet,**
**daß** der Schaft (21) an einer ersten Stirnfläche (32) eine zentrisch angeordnete und konisch verlaufende erste Innenbohrung (20) zur Aufnahme des ersten Teilkörpers (19) der Spannzange (14) aufweist, deren Innendurchmesser geringfügig kleiner als der Außendurchmesser des ersten Teilkörpers (19) der Spannzange (14) im nicht-gespannten Zustand ist.

14. Einspannvorrichtung nach Anspruch 13,
**dadurch gekennzeichnet,**
**daß** der Schaft (21) zur Zuführung von Kühlmittel und zur axialen Verschiebung des einlippigen Tieflochbohrers (1) in der Einspannvorrichtung (13A; 13B) an einer zweiten Stirnfläche (34) eine zweite Innenbohrung (33) aufweist, die sich axial an die erste Innenbohrung (20) anschließt.

15. Einspannvorrichtung nach Anspruch 13 oder 14,
**dadurch gekennzeichnet,**
**daß** der Schaft (21) auf seiner Außenmantelfläche (29) in der Nähe der ersten Stirnfläche (32) ein Außengewinde (30) aufweist, das mit dem Innengewinde (31) der Überwurfmutter (23) eine Schraubverbindung (24) bildet.

16. Einspannvorrichtung nach einem der Ansprüche 13 bis 15,
**dadurch gekennzeichnet,**
**daß** der Schaft (21) ein Profil aufweist, das passend zur Spannvorrichtung einer Werkzeugmaschine ausgelegt ist.

17. Einspannvorrichtung nach einem der Ansprüche 6 bis 16,
**dadurch gekennzeichnet,**
**daß** das Absperrorgan (37A) einen Zwischenraum zwischen der Bohrungswand der Durchgangsbohrung (36) der Überwurfmutter (23) und dem einlippigen Tieflochbohrer (1) dichtend verschließt.

18. Einspannvorrichtung nach Anspruch 14,
**dadurch gekennzeichnet,**
**daß** das Absperrorgan (37B) einen Zwischenraum zwischen der Bohrungswand der ersten und zweiten Innenbohrung (20, 33) des Schafts (13B) und dem einlippigen Tieflochbohrer (1) dichtend verschließt.

19. Einspannvorrichtung nach Anspruch 18,
**dadurch gekennzeichnet,**
**daß** das Absperrorgan (37B) einen zylindrischen Teilkörper (46) mit einem Außendurchmesser D₅, der geringfügig größer als der Innendurchmesser D₆ der zweiten Innenbohrung (33) des Schafts (21) ist, und einen an den zylindrischen Teilkörper (46) anschließenden flanschförmigen Teilkörper (47) mit einem Außendurchmesser D₇, der geringfügig größer als der kleinste Durchmesser D₈ des konisch verlaufenden ersten Innenbohrung (20) des Schafts (21) ist, aufweist.

20. Einspannvorrichtung nach Anspruch 19,
**dadurch gekennzeichnet,**
**daß** das Absperrorgan (37B) in einer ringförmigen Nut (48) im flanschförmigen Teilkörper (47) einen Spannring (49) aufweist.

21. Einspannvorrichtung nach Anspruch 17 oder 18,
**dadurch gekennzeichnet,**
**daß** das Absperrorgan (37A; 37B) zur zentrischen Führung des einlippigen Tieflochbohrers (1) eine Ausnehmung (38) aufweist, deren Querschnittsprofil dem Profil des einlippigen Tieflochbohrers (1) entspricht.

22. Einspannvorrichtung nach Anspruch 17 oder 18,
**dadurch gekennzeichnet,**
**daß** das Absperrorgan (37A; 37B) aus einem Kunststoffmaterial besteht.
